Europäisches Patentamt

European Patent Office

Office européen des brevets

(19)

(11) **EP 0 474 750 B1**

(12) ## EUROPEAN PATENT SPECIFICATION

(45) Date of publication and mention
of the grant of the patent:
**02.10.1996 Bulletin 1996/40**

(21) Application number: **90909161.3**

(22) Date of filing: **06.06.1990**

(51) Int Cl.$^6$: **C10M 111/04**, C10M 169/04,
F16C 33/20, E01C 19/00

(86) International application number:
**PCT/GB90/00878**

(87) International publication number:
**WO 90/15123 (13.12.1990 Gazette 1990/28)**

(54) **LUBRICANT COMPOSITION**

SCHMIERMITTELZUSAMMENSETZUNG

COMPOSITION LUBRIFIANTE

(84) Designated Contracting States:
**BE CH DE DK ES FR GB IT LI NL SE**

(30) Priority: **08.06.1989 US 364453**
**13.03.1990 US 492815**

(43) Date of publication of application:
**18.03.1992 Bulletin 1992/12**

(73) Proprietor: **Kelsan Technologies Corp.**
**North Vancouver, British Columbia V7R 4W6**
**(CA)**

(72) Inventors:
• **CHIDDICK, Kelvin, Spencer**
**North Vancouver, British Columbia V7B 1T (CA)**
• **KALOUSEK, Joseph**
**Vancouver, British Columbia (CA)**

(74) Representative: **MacMaster, Alan Jeffrey**
**Swindell & Pearson**
**48 Friar Gate**
**Derby DE1 1GY (GB)**

(56) References cited:
**EP-A- 372 559**         **CH-A- 669 207**
**DE-A- 2 703 918**       **US-A- 2 860 111**
**US-A- 3 839 208**

• **PATENT ABSTRACTS OF JAPAN, Volume 3 No.**
**118, 4 October 1979; & JP-A-5496556 (Teijn K.K.)**
**31.09.1979**

Remarks:
The file contains technical information submitted
after the application was filed and not included in this
specification

**Description**

This invention relates to lubricant compositions and especially to solid or flexible-solid lubricant compositions (referred to hereinafter simply as solid lubricant compositions).

The most fundamental of frictional properties is the "coefficient of friction" which is the ratio between the friction (tangential) force and the normal (vertical) force acting between bodies in relatively movable contact with one another. In general, the friction force is independent of the velocity of relative motion. However, there are many exceptions.

The friction force required to initiate sliding between two bodies (static friction) is usually greater than the force required to maintain sliding between the two bodies (dynamic friction). This has given rise to the concept that there are two coefficients of friction, namely static (for surfaces at rest) and dynamic (for surfaces in motion).

Recent investigations have shown this to be an oversimplification and that the static friction coefficient is a function of time of contact, whereas the kinetic (dynamic) friction coefficient is a function of velocity throughout the range of velocities between the two relatively moving bodies. The change in kinetic friction coefficient is appreciable if the relative sliding velocities are extremely low or extremely high or if there is rolling-sliding contact between the bodies. When friction increases with speed, it is characterized as having a positive friction characteristic, whereas when it decreases with speed, it is known as having a negative friction characteristic. Hereinafter, the term "positive friction characteristic" means that the coefficient of friction increases with speed of sliding and the term "high" refers to a coefficient of friction greater than 0.10.

With sliding systems having a negative friction characteristic, friction oscillations may arise which produce the squeaking and chattering characteristic of many sliding systems. This squeaking and chattering may be reduced or eliminated:

a) by making the mechanical system or equipment in which it occurs very rigid;
b) by reducing the friction between the relatively moving components to very low levels; or
c) by changing the friction characteristic from a negative one to a positive one.

Many steel rail-wheel transportation systems including freight, passenger and mass transit systems suffer from squealing or other types of high noise levels which cause a nuisance to persons dwelling close to such systems. The origin of such squealing can be traced to the negative friction characteristic between an unlubricated steel wheel and a steel rail. In any dynamic steel wheel steel rail system, there is a constantly moving zone of contact. For purposes of discussion and analysis, it is convenient to treat the zone of contact as stationary while the rail and wheel moves through the zone of contact. When the rail moves through the zone of contact at exactly the same speed and direction as the cylindrical wheel, the wheel is in an optimum state (no appreciable friction) of pure rolling over the rail. However, because the rail and the wheel are profiled, misaligned and subject to motions other than strict rolling, the respective velocities at which the rail and the wheel move through the zone of contact are not the same and sliding occurs. The magnitude and the speed of the sliding is dependent on the difference, expressed in percentage, between the rail and wheel velocities at the point of contact. This percentage difference is termed creepage.

When creepage takes place, the entire zone of contact between wheel and rail is in a state of sliding and frictional forces are generated. Since most unlubricated "steel-on-steel" surfaces exhibit a negative friction characteristic (the frictional force decreases with the speed of sliding) the rail wheel interface is excited vibrationally and thus noise, in a wide range of frequencies, is produced.

The oscilliatory motion in a rail wheel interface, in addition to raising generated noise level, produces an undulatory wave pattern on the rail or wheel surfaces. With time, under such motion, wave-like patterns of short-pitch (generally in the region of 5cm or 2") are formed on to the rail and wheel surfaces. These undulations are generally referred to as corrugations. A rail with corrugations is sometimes called a "roaring rail". When this occurs, the noise levels are increased beyond those for a smooth rail/wheel interface. Usual practice to cure this problem is to remove rail corrugations by grinding or machining the rail or wheel surface, but with use corrugations again build up over time. In addition such grinding of rails and wheels is time consuming and expensive.

Because of the nature of rail vehicles and track structure, these systems cannot be made rigid so as to eliminate the noise generated by creepage. Moreover, reduction of friction to very low levels would prevent vehicles from having sufficient grip for braking or accelerating.

European Patent Specification No. 372559 discloses a coating composition incorporating a synthetic resin, a solid lubricant and a friction modifier. The specification makes no reference to the problem of slippage in rail/wheel systems and the composition is described as a conventional lubricant for use in reducing friction between components to which it is applied. Conventional lubricants have a negative friction characteristic, that is the coefficient of friction reduces with increase in relative movement between the lubricated surfaces. European Specification No. 372559 does not therefore teach a solution to the problem of slippage in a rail/wheel system where an increase in coefficient of friction would be required at the point when slippage occurs.

EP 0 474 750 B1

It is an object of the present invention to provide a lubricant composition which is capable of effectively reducing short pitch corrugation. This is achieved by a lubricant composition having high and positive friction characteristics.

Thus according to the invention there is provided a lubricant composition for use in the lubrication of steel bodies in rolling-sliding contact, characterised in that it comprises:

a) at least 20% by weight of polymer medium;
b) at least 5% by weight of a solid lubricant; and
c) at least 5% by weight of a friction modifier;

said friction modifier and solid lubricant being present in the composition in a ratio (friction modifier:solid lubricant) of 1:1 ± 2.5 wt.%, said composition being solid and producing a coefficient of friction between sliding bodies in rolling-sliding contact, lubricated using the composition, at a creepage greater than 2.5%, greater than 0.10, which coefficient of friction increases with an increase in relative speed of sliding movement between the said bodies.

Preferably the composition comprises:

a) 20-90% by weight of a polymer medium;
b) 5-40% by weight of a solid lubricant; and
c) 5-40% by weight of a friction modifier.

In a preferred embodiment the composition comprises 56-80% by weight of the polymer medium, 10-22% by weight of the solid lubricant and 10-22% by weight of the friction modifier.

The polymer medium may be selected from the group consisting of epoxy ester resin, polyurethane resin, polyurethane-acrylic resin, polyester resin, polyethylene resin and polypropylene resin or combinations thereof.

The solid lubricant may be selected from the group consisting of molybdenum disulphide and graphite or combinations thereof.

The friction modifier may be selected from the group consisting of powderized calcium carbonate, magnesium silicate, magnesium carbonate, bentonite, coal dust, barium sulphate, powderized asbestos, aluminium silicate, silica, amorphous silica, synthetic silica, natural silica, slate powder, diatomaceous earth, ground quartz, zinc stearate, aluminium stearate, zinc oxide, antimony oxide, dolomite, and lead carbonate, calcium sulphate, lead oxide, naphthalene synemite, and powderized polyethylene fibres or combinations thereof.

The polymer medium preferably comprises at least forty per cent by weight of the composition.

The polymer medium may comprise about forty per cent by weight of the composition. Preferably the solid lubricant comprises about thirty per cent by weight of the composition and the friction modifier comprises about thirty per cent by weight of the composition.

The friction modifier may have a particle size in the range of 0.5 microns to 5 microns, and preferably has a particle size in the range of 1 micron to 2 microns.

The friction modifier may produce a coefficient of friction between steel bodies in the range of 0.4 to 0.8, and preferably in the range of 0.45 to 0.5.

The composition preferably produces a coefficient of friction between steel bodies ranging from 0.17 to 0.32, as the relative speed of sliding increases from 2.5% to 30%.

In a specific embodiment, the invention provides a high positive friction lubricant composition comprising:

(a) 40% by weight of a polyester resin medium;
(b) 30% ± 2.5% by weight of a molybdenum disulphide solid lubricant producing a coefficient of friction between steel bodies of about 0.06; and
(c) 30% ± 2.5% by weight of powderized talc (magnesium silicate) as a friction modifier producing a coefficient of friction between steel bodies from 0.45 to 0.5;

such that the resulting steel to steel coefficient of friction of the composition is greater than 0.15 and the composition exhibits a positive friction characteristic.

The polyester resin medium may be orthophthalic or alternatively may be isophthalic. The composition may contain graphite instead of molybdenum disulphide solid lubricant or a combination thereof.

A preferred embodiment of the invention provides a high and positive friction lubricant composition comprising:

(a) 70% by weight of polyester resin medium;
(b) 14% ± 2.5% by weight of molybdenum disulphide solid lubricant;
(c) 14% ± 2.5% by weight of powderized talc (magnesium silicate);
(d) 0.3% promoters to improve and speed up the cure rate and gel time; and

3

(e) 1.7% initiators of polymerization.

The resulting steel to steel coefficient of friction is about 0.15 and increases directly with an increase in the speed of sliding.

The high positive friction lubricant of the invention can be exploited in controlling the traction force between the locomotive wheel set and track when the wheel set is under traction torque or dynamic braking action. This can result in better traction and braking action due to the positive coefficient of friction.

The lubricant of the invention, in addition to the rail-wheel use discussed above, is suitable for use in any situation in which high friction, in the range of 0.15 to 0.35, and noiseless operation, or both, are required to eliminate slip-stick. The invention is particularly suitable for solid lubrication of traction drives (both fixed and variable-ratio).

Further according to the present invention there is provided a method of reducing noise in a steel wheel/steel rail system characterised by applying to the surface of the wheel tread and/or the rail a lubricant composition effective to change the negative friction characteristic between the rail and the wheel to a positive friction characteristic, said composition comprising:

(a) at least 20% by weight of a polymer medium;
(b) at least 5% by weight of a solid lubricant; and
(c) at least 5% by weight of a friction modifier;

said friction modifier and solid lubricant being present in the composition in a ratio (friction modifier:solid lubricant) of 1:1 ± 2.5 wt.%, said composition being solid and producing a coefficient of friction between the wheel tread and the rail, at a creepage greater than 2.5%, greater than 0.1, which coefficient of friction increases with increase in relative sliding movement between the wheel and the rail.

The invention also provides a method of reducing wear in a steel wheel/steel rail system characterised by applying to the surface of the wheel tread and/or the rail a lubricant composition effective to change the negative friction characteristic between the rail and the wheel to a positive friction characteristic, the composition comprising:

(a) at least 20% by weight of a polymer medium;
(b) at least 5% by weight of a solid lubricant; and
(c) at least 5% by weight of a friction modifier;

said friction modifier and solid lubricant being present in the composition in a ratio (friction modifier:solid lubricant) of 1:1 ± 2.5 wt.%, said composition being solid and producing a coefficient of friction between the wheel tread and the rail, at a creepage greater than 2.5%, greater than 0.1, which coefficient of friction increases with increase in relative sliding movement between the wheel and the rail.

The invention further provides a method of reducing or eliminating slip stick in a steel wheel/steel rail system characterised by continuously applying to the wheel a lubricant composition comprising:

(a) at least 20% by weight of a polymer medium;
(b) at least 5% by weight of a solid lubricant; and
(c) at least 5% by weight of a friction modifier;

said friction modifier and solid lubricant being present in the composition in a ratio (friction modifier:solid lubricant) of 1:1 ± 2.5 wt.%, said composition being solid and producing a coefficient of friction between the wheel tread and the rail, at a creepage greater than 2.5%, greater than 0.1, which coefficient of friction increases with increase in relative sliding movement between the wheel and the rail.

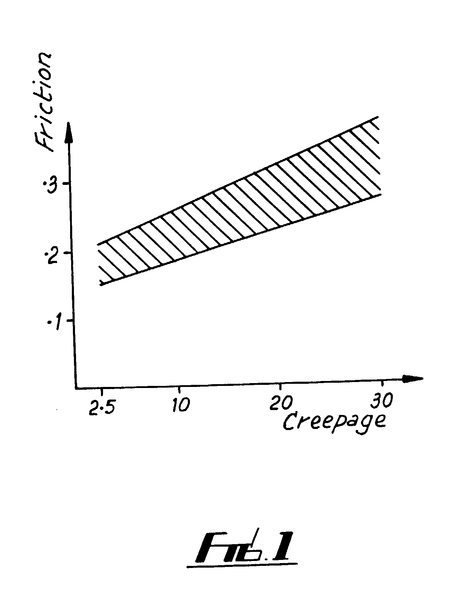

The drawing depicts graphically the friction versus creepage performance of a lubricant according to a specific embodiment of the invention but should not be construed as restricting the scope of the invention in any way.

According to one embodiment the invention provides a high, positive friction lubricant composition (Composition A) comprising:

(a) about 40% by weight of a polyester resin medium;
(b) about 30% by weight of molybdenum disulphide lubricant; and
(c) about 30% by weight of a talc friction modifier.

Similar high, positive friction solid lubricants according to the invention can be formulated by selecting one or more media, lubricants and friction modifiers from the following:

Media

Epoxy ester resin - (amine cured & polyamide cured).

Two-pack polyurethane resin
Polyurethane-acrylic resin
Polyester resin - (including plasticized orthophthalic and isophthalic resins)
Polyethylene resin
Polypropylene resin

Solid Lubricant

Molybdenum Disulphide - $MOS_2$
Graphite - C

Friction Modifier (Powder)

Whiting - (Calcium Carbonate ($CaCo_3$))
Magnesium Carbonate
Talc - Magnesium Silicate ($MgSiO_2$)
Bentonite - (Natural Clay)
Coal Dust - (Ground Coal)
Barytes - (Barium Sulphate ($BaSO_4$))
Blanc Fixe - (Calcium Sulphate ($CaSO_4$))
Asbestos - (Asbestine derivative of asbestos)
China Clay - (Aluminium Silicate ($AlSiO_2$))
Silica - Amorphous - (Synthetic - (Si))
Naturally occurring (Si)
Slate Powder - (Si)
Diatomaceous Earth - (Si)
Ground Quartz - ($SiO_2$)
Zinc Stearate
Aluminium Stearate
Magnesium Carbonate - $MgCo_3$
White Lead - PbO
Basic Lead Carbonate - $PbCO_3$
Zinc Oxide - $ZnO_2$
Antimony Oxide - $Sb_2O_3$
Dolomite - $MgCo_3CaCo_3$
Calcium Sulphate
Naphthalene Synemite
Polyethylene Fibres

In a preferred embodiment of the invention the lubricant composition includes about 70% by weight of a fire retardant brominated isophthalic polyester resin containing about 3% antimony trioxide relative to the resin; about 14% by weight of molybdenum disulphide and about 14% by weight of talc. In this preferred example other catalysts are added; for example 12% cobalt naphthenate a promoter used to speed up gel time; n, n-dimethylaniline, a promoter used to improve the cure rate, and methylethylketone peroxide (50%), an organic peroxide used to initiate the polymerization reaction.

The lubricant composition may be prepared according to the following method. When a two component resin system is used, the two component polyester resin is loaded into a mixing drum at room temperature. While the two component resin system is being mixed, a friction modifier such as talc is added slowly and dispersed into the resin. The molybdenum disulphide is then added slowly to the mixture and dispersed into the resin. When the components are thoroughly mixed, they are pumped into a multi-shot mixing head at which a catalyst is added. Typical catalysts are methylethylketone peroxide, and n, n-dimethylamine and cobalt naphthenate. The ratios of the two are adjusted to control the setting rate of the resin. If necessary, wax at a concentration of about 1% by weight (a 5% solution of paraffin in styrene) may be included to eliminate tackiness of the set resin. Also, about 5% acetone may be added to the mixture to reduce viscosity, if desired.

The blended mixture of resin, lubricant and friction modifier, together with catalysts and other modifiers, is transported via a mixing tube into open moulds which are on a conveyor system. When filled, the moulds are moved through a curing oven to accelerate the, cure time of the product. The cured product is then dropped out of the moulds, which are inverted, and packaged for delivery to customers.

If thermoplastic resins are used the blended mixture of resins, lubricant and friction modifier are generally injection moulded at temperatures in the range of 180°C to 200°C, at two to three atmospheric pressure, into a cured final product of any desired shape determined by the injection mould.

The solid lubricant of the invention is typically molybdenum disulphide or graphite. The friction modifier is preferably a naturally occurring mineral, but certain synthetic minerals of satisfactory particle size can also be used. The particle size of the friction modifier can be in the order of 0.5 microns to 5 microns. Preferably, the particle size is 1 micron to 2 microns.

The friction modifier should preferably produce a coefficient of friction between steel bodies which is considerably higher than that produced by the solid lubricant. The coefficient of friction of the friction modifier can be 0.4 to 0.8. Preferably, the coefficient of friction is 0.45 to 0.5. Talc having a particle size between 1 micron and 2 microns produces a steel to steel, coefficient of friction between 0.45 and 0.5.

The typical steel to steel coefficient of friction for molybdenum disulphide is about 0.06. The steel to steel coefficient of friction for lubricant compositions according to the invention should preferably increase from about 0.17 to about 0.32 as creepage increases from about 2.5 to about 30%. Preferably, the steel to steel coefficient of friction produced by the lubricant composition should be less than 0.3.

The desired coefficient of friction level for the lubricant composition may be obtained by proportionately mixing appropriate quantities of the friction modifier which has a high coefficient of friction and the solid lubricant which has a very low coefficient of friction. The solid lubricant and the friction modifier are preferably present in the composition in equal amounts but may differ from each other by up to about 5% without affecting the friction characteristics of the composition.

## EXAMPLES 1 TO 4

Combinations of the above identified products have been prepared as follows: -

| | | Upper and Lower Range Limits Per Cent (%) By Weight | |
|---|---|---|---|
| 1) | Epoxy resin as base medium | 90 | 30 |
| | Talc | 5 | 35 |
| | Molybdenum Disulphide | 5 | 35 |
| | | $\overline{100}$ | $\overline{100}$ |
| 2) | Two-pack polyurethane resin as base medium | 90 | 30 |
| | Talc | 5 | 35 |
| | Molybdenum Disulphide | 5 | 35 |
| | | $\overline{100}$ | $\overline{100}$ |
| 3) | Polyurethane acrylic resin as base medium | 90 | 30 |
| | Talc | 5 | 35 |
| | Molybdenum Disulphide | 5 | 35 |
| | | $\overline{100}$ | $\overline{100}$ |
| 4) | Polyester resin | 90 | 30 |
| | Talc | 5 | 35 |
| | Molybdenum Disulphide | 5 | 35 |
| | | $\overline{100}$ | $\overline{100}$ |

All the above combinations were also formulated replacing the molybdenum disulphide with graphite.

## EXAMPLE 5

A lubricant composition (according to Composition A) was tested and found to have a positive steel to steel friction characteristic in the range of 0.15 to 0.35 as the speed of sliding (creepage) increased from about 2.5% to about 30%. These friction levels are above steel to steel friction coefficient levels associated with conventional solid, semi-solid and liquid lubricants. When applied to the surfaces of a rail or a wheel tread, the composition was found to alleviate (if not eliminate) the initiation and development of short-pitch corrugations. Noise originating from frictional oscillations in the rail-wheel interface was almost completely eliminated.

EXAMPLE 6

The positive friction lubricant (Composition A) was tested for frictional properties on the Amsler wear tester (Amsler apparatus is commercially produced by a Swiss company). An Amsler wear tester is designed to test cylindrical specimens, ranging in diameter from 3 to 5 cm, for frictional and wear properties under rolling sliding conditions. By changing the diameter of the specimens and the gear ratio on the apparatus, the specimens can be subjected to a wide range of creepages. The apparatus is also capable of measuring friction coefficient and is therefore used to evaluate the frictional properties of lubricants.

When the lubricant composition was applied to steel specimens of composition and hardness typical of rail and wheel steels, a range of coefficients of friction were obtained. The obtained mean coefficients of friction of 0.17 and 0.32 were measured at 2.5% and 30% creepage, respectively. All other tests with this lubricant yielded a coefficient of friction within the hatched region shown in the drawing.

EXAMPLE 7

A lubricant composition was prepared as described above using the following components.

|  | % By Weight |
|---|---|
| Fire retardant, brominated, isophthalic, polyester resin + 3% antimony trioxide | 69.87 |
| Molybdenum disulphide | 14.08 |
| Talc 44-26 | 14.08 |
| 12% Cobalt naphthenate (promoter used to speed up gel time) | 0.25 |
| n, n-dimethylaniline (promoter used to improve the cure rate) | 0.03 |
| Methyethylketone peroxide (50%) (organic peroxide used to initiate polymerization reaction) | 0.69 |
|  | 100.00 |

The steel to steel coefficient of friction produced by this lubricant composition changes from about 0.17 to about 0.32 as the speed of sliding increases from about 2.5% to about 30%.

Lubricant compositions with high and positive friction characteristics provide an extremely attractive solution in a steel-steel sliding situation. When introduced into the rail-wheel interface in sufficient quantities, they will reduce or eliminate noise by lubrication and, at the same time, permit the vehicle to have traction to propel, accelerate or brake. An additional benefit of such lubricants is that the wear rate of the rail and wheel steels is reduced. Apart from reduced friction (and noise) and wheel-rail wear, use of a high and positive friction lubricant can prevent the initiation and growth of short pitch corrugation by preventing or eliminating the oscilliatory motions which are excited in the rail/wheel interface by the presence of negative friction.

**Claims**

1. A lubricant composition for use in the lubrication of steel bodies in rolling-sliding contact, characterised in that it comprises:

   a) at least 20% by weight of polymer medium;
   b) at least 5% by weight of a solid lubricant; and
   c) at least 5% by weight of a friction modifier;

   said friction modifier and solid lubricant being present in the composition in a ratio (friction modifier:solid lubricant) of 1:1 ± 2.5 wt.%, said composition being solid and producing a coefficient of friction between sliding bodies in rolling-sliding contact, lubricated using the composition, at a creepage greater than 2.5%, greater than 0.10, which coefficient of friction increases with an increase in relative speed of sliding movement between the said bodies.

2. A composition according to claim 1 characterised in that the composition comprises:

    (a) 20-90% by weight of a polymer medium;
    (b) 5-40% by weight of a solid lubricant; and
    (c) 5-40% by weight of a friction modifier.

3. A composition according to claim 1 or 2
characterised in that said solid lubricant produces a coefficient of friction between steel bodies from 0.03 to 0.2.

4. A composition according to any of claims 1 to 3 characterised in that said friction modifier comprises a powderized mineral material.

5. A composition according to any of claims 1 to 4 characterised in that said solid lubricant and said friction modifier are present in substantially equal amounts.

6. A composition according to any of claims 1 to 5 characterised in that it comprises 56-80% by weight of said polymer medium, 10-22% by weight of said solid lubricant and 10-22% by weight of said friction modifier.

7. A composition according to any of claims 1 to 6 characterised in that said polymer medium comprises any one or more mediums selected from the group consisting of epoxy ester resin, polyurethane resin, polyurethane-acrylic resin, polyester resin, polyethylene resin and polypropylene resin.

8. A composition according to any of claims 1 to 7 characterised in that said solid lubricant is selected from the group consisting of molybdenum disulphide, graphite and combinations thereof.

9. A composition according to any of claims 1 to 8 characterised in that said friction modifier comprises one or more materials selected from the group consisting of calcium carbonate, magnesium silicate, magnesium carbonate, bentonite, coal dust, barium sulphate, powderized asbestos, aluminium silicate, silica, amorphous silica, synthetic silica, natural silica, slate powder, diatomaceous earth, ground quartz, zinc stearate, aluminium stearate, zinc oxide, antimony oxide, dolomite, lead carbonate, calcium sulphate, lead oxide, naphthalene synemite and powderized polyethylene fibres.

10. A composition according to any of claims 1 to 9 characterised in that said polymer medium comprises forty per cent by weight of the composition, said solid lubricant comprises thirty per cent by weight of the composition and said friction modifier comprises thirty per cent by weight of the composition.

11. A composition according to any of claims 1 to 10 characterised in that said friction modifier has a particle size in the range of 0.5 microns to 5 microns.

12. A composition according to any of claims 1 to 11 characterised in that said friction modifier produces a coefficient of friction between steel bodies in the range of 0.4 to 0.8.

13. A composition according to any preceding claim characterised in that the composition produces a coefficient of friction between steel bodies varying from between 0.17 and 0.32 as the relative speed of sliding increases from 2.5% to 30%.

14. A composition according to claim 10 comprising:

    (a) 40% by weight of a polyester resin medium;
    (b) 30% ± 2.5% by weight of molybdenum disulphide solid lubricant producing a coefficient of friction between steel bodies of approximately 0.06; and
    (c) 30% ± 2.5% by weight of powderized talc (magnesium silicate) producing a coefficient of friction between steel bodies from 0.45 to 0.5;

such that the resulting steel to steel coefficient of friction of the composition is greater than 0.15 and the composition exhibits a positive friction characteristic.

15. A composition according to any of claims 1 to 9 comprising:

(a) 70% by weight of a polyester resin medium;
(b) 14% ± 2.5% by weight of molybdenum disulphide solid lubricant; and
(c) 14% ± 2.5% by weight of powderized talc (magnesium silicate)

such that in use the resulting steel to steel coefficient of friction of the composition ranges from 0.17 to 0.32 as the relative speed of sliding increases from 2.5% to 30%.

16. A composition according to any of claims 1 to 15 characterised in that it includes one or more catalysts selected from the group consisting of cobalt naphthenate, n, n-dimethylaniline and methylethylketone peroxide.

17. A method of reducing noise in a steel wheel/steel rail system characterised by applying to the surface of the wheel tread and/or the rail a lubricant composition effective to change the negative friction characteristic between the rail and the wheel to a positive friction characteristic, said composition comprising:

(a) at least 20% by weight of a polymer medium;
(b) at least 5% by weight of a solid lubricant; and
(c) at least 5% by weight of a friction modifier;

said friction modifier and solid lubricant being present in the composition in a ratio (friction modifier:solid lubricant) of 1:1 ± 2.5 wt.%, said composition being solid and producing a coefficient of friction between the wheel tread and the rail, at a creepage greater than 2.5%, greater than 0.1, which coefficient of friction increases with increase in relative sliding movement between the wheel and the rail.

18. A method of reducing wear in a steel wheel/steel rail system characterised by applying to the surface of the wheel tread and/or the rail a lubricant composition effective to change the negative friction characteristic between the rail and the wheel to a positive friction characteristic, the composition comprising:

(a) at least 20% by weight of a polymer medium;
(b) at least 5% by weight of a solid lubricant; and
(c) at least 5% by weight of a friction modifier;

said friction modifier and solid lubricant being present in the composition in a ratio (friction modifier:solid lubricant) of 1:1 ± 2.5 wt.%, said composition being solid and producing a coefficient of friction between the wheel tread and the rail, at a creepage greater than 2.5%, greater than 0.1, which coefficient of friction increases with increase in relative sliding movement between the wheel and the rail.

19. A method of reducing or eliminating slip stick in a steel wheel/steel rail system characterised by continuously applying to the wheel a lubricant composition comprising:

(a) at least 20% by weight of a polymer medium;
(b) at least 5% by weight of a solid lubricant; and
(c) at least 5% by weight of a friction modifier;

said friction modifier and solid lubricant being present in the composition in a ratio (friction modifier:solid lubricant) of 1:1 ± 2.5 wt.%, said composition being solid and producing a coefficient of friction between the wheel tread and the rail, at a creepage greater than 2.5%, greater than 0.1, which coefficient of friction increases with increase in relative sliding movement between the wheel and the rail.

20. A method according to claim 17, 18 or 19 characterised in that said lubricant composition is applied in the form of a film by maintaining a solid block of the composition in contact with said wheel tread.

**Patentansprüche**

1. Schmiermittel-Zusammensetzung zur Verwendung bei der Schmierung von Stahlkörpern in rollend-gleitender Berührung, dadurch gekennzeichnet, daß es aufweist:

a) mindestens 20 Gew.% eines Polymermediums;

b) mindestens 5 Gew.% eines Feststoff-Schmiermittels; und

c) mindestens 5 Gew.% eines Reibungsmodifizierers;

wobei der Reibungsmodifizierer und das Feststoff-Schmiermittel in der Zusammensetzung in einem Verhältnis (Reibungsmodifizierer : Feststoff-Schmiermittel) von 1 : 1 = 2,5 Gew.% vorliegt, wobei die Zusammensetzung ein Feststoff ist und einen Reibungskoeffizienten zwischen gleitenden Körpern in rollend-gleitender Berührung bei Schmierung unter Verwendung der Zusammensetzung und einem Kriechen von mehr als 2,5 % erzeugt, der größer als 0,10 ist, wobei der Reibungskoeffizient mit einer Zunahme der Relativgeschwindigkeit der Gleitbewegung zwischen den Körpern zunimmt.

2. Zusammensetzung nach Anspruch 1, dadurch gekennzeichnet, daß die Zusammensetzung aufweist:

a) 20-90 Gew.% eines Polymermediums;

b) 5-40 Gew.% eines Feststoff-Schmiermittels; und

c) 5-40 Gew.% eines Reibungsmodifizierers.

3. Zusammensetzung nach Anspruch 1 oder 2, dadurch gekennzeichnet, daß das Feststoff-Schmiermittel einen Reibungskoeffizienten zwischen Stahlkörpern von 0,03 bis 0,2 erzeugt.

4. Zusammensetzung nach einem der Ansprüche 1 bis 3, dadurch gekennzeichnet, daß der Reibungsmodifizierer ein pulverisiertes mineralisches Material aufweist.

5. Zusammensetzung nach einem der Ansprüche 1 bis 4, dadurch gekennzeichnet, daß das Feststoff-Schmiermittel und der Reibungsmodifizierer im wesentlichen in gleichen Mengen vorliegen.

6. Zusammensetzung nach einem der Ansprüche 1 bis 5, dadurch gekennzeichnet, daß sie 56-80 Gew.% des Polymermediums, 10-22 Gew.% des Feststoff-Schmiermittels und 10-22 Gew.% des Reibungsmodifizierers aufweist.

7. Zusammensetzung nach einem der Ansprüche 1 bis 6, dadurch gekennzeichnet, daß das Polymermedium irgendeines oder mehrere Medien der aus Epoxidesterharz, Polyurethanharz, Polyurethanacrylharz, Polyesterharz, Polyethylenharz und Polypropylenharz bestehenden Gruppe aufweist.

8. Zusammensetzung nach einem der Ansprüche 1 bis 7, dadurch gekennzeichnet, daß das Feststoff-Schmiermittel aus der aus Molybdändisulfid, Graphit und deren Kombinationen bestehenden Gruppe ausgewählt wird.

9. Zusammensetzung nach einem der Ansprüche 1 bis 8, dadurch gekennzeichnet, daß der Reibungsmodifizierer eines oder mehrere ausgewählte Materialien aus der Gruppe aufweist, die aus Kalziumkarbonat, Magnesiumsilikat, Magnesiumkarbonat, Bentonit, Kohlestaub, Bariumsulfat, pulverisiertem Asbest, Aluminiumsilikat, Siliziumdioxid, amorphem Siliziumdioxid, synthetischem Siliziumdioxid, natürlichem Siliziumdioxid, Schieferpulver, Diatomeenerde, gemahlenem Quarz, Zinkstearat, Aluminiumstearat, Zinkoxid, Antimonoxid, Dolomit, Bleikarbonat, Kalziumsulfat, Bleioxid, Naphtalinsynemit und pulverisierten Polyethylenfasern besteht.

10. Zusammensetzung nach einem der Ansprüche 1 bis 9, dadurch gekennzeichnet, daß das Polymermedium 40 Gew.% der Zusammensetzung, das Feststoff-Schmiermittel 30 Gew.% der Zusammensetzung und der Reibungsmodifizierer 30 Gew.% der Zusammensetzung aufweist.

11. Zusammensetzung nach einem der Ansprüche 1 bis 10, dadurch gekennzeichnet, daß der Reibungsmodifizierer eine Partikelgröße im Bereich von 0,5 $\mu$m bis 5 $\mu$m hat.

12. Zusammensetzung nach einem der Ansprüche 1 bis 11, dadurch gekennzeichnet, daß der Reibungsmodifizierer einen Reibungskoeffizienten zwischen Stahlkörpern im Bereich von 0,4 bis 0,8 erzeugt.

13. Zusammensetzung nach einem der vorhergehenden Ansprüche, dadurch gekennzeichnet, daß die Zusammensetzung einen Reibungskoeffizienten zwischen Stahlkörpern erzeugt, der sich von 0,17 auf 0,32 verändert, wenn die relative Gleitgeschwindigkeit von 2,5 % auf 30 % zunimmt.

14. Zusammensetzung nach Anspruch 10, welche aufweist:

a) 40 Gew.% eines Polyesterharzmediums;

b) 30 ± 2,5 Gew.% Molybdändisulfid-Feststoff-Schmiermittel, das einen Reibungskoeffizienten zwischen Stahlkörpern von ca. 0,06 erzeugt; und

c) 30 ± 2,5 Gew.% pulverisierten Talk (Magnesiumsilikat), das einen Reibungskoeffizienten zwischen Stahlkörpern von 0,45 bis 0,5 erzeugt,

so daß der sich ergebende Stahl-Stahl-Reibungskoeffizient der Zusammensetzung größer als 0,15 ist und die Zusammensetzung eine positive Reibungskennlinie hat.

15. Zusammensetzung nach einem der Ansprüche 1 bis 9, welche aufweist:

a) 70 Gew.% eines Polyesterharzmediums;

b) 14 ± 2,5 Gew.% Molybdändisulfid-Feststoff-Schmiermittel; und

c) 14 ± 2,5 Gew.% pulverisierten Talk (Magnesiumsilikat), so daß im Betrieb der sich ergebende Stahl-Stahl-Reibungskoeffizient der Zusammensetzung im Bereich 0,17 bis 0,32 liegt, wenn die relative Gleitgeschwindigkeit von 2,5 % auf 30 % zunimmt.

16. Zusammensetzung nach einem der Ansprüche 1 bis 15, dadurch gekennzeichnet, daß sie einen oder mehrere Katalysatoren enthält, die aus der Gruppe ausgewählt werden, welche aus Kobaltnaphthenat, n,n-Dimethylanilin und Methylethylketonperoxid besteht.

17. Verfahren zum Verringern von Geräuschen in einem Stahlrad/Stahlschiene-System, dadurch gekennzeichnet, daß auf die Aufstandsfläche des Rades und/oder der Schiene eine Schmiermittel-Zusammensetzung aufgetragen wird, die eine Veränderung der negativen Reibungskennlinie zwischen der Schiene und dem Rad zu einer positiven Reibungskennlinie bewirkt, wobei die Zusammensetzung aufweist:

a) mindestens 20 Gew.% eines Polymermediums;

b) mindestens 5 Gew.% eines Feststoff-Schmiermittels; und

c) mindestens 5 Gew.% eines Reibungsmodifizierers,

wobei der Reibungsmodifizierer und das Feststoff-Schmiermittel in der Zusammensetzung in einem Verhältnis (Reibungsmodifizierer : Feststoff-Schmiermittel) von 1 : 1 = 2,5 Gew.% vorliegt, wobei die Zusammensetzung ein Feststoff ist und einen Reibungskoeffizienten zwischen der Aufstandsfläche des Rades und der Schiene bei einem Kriechen von mehr als 2,5 % erzeugt, der größer als 0,1 ist, wobei der Reibungskoeffizient mit einer Zunahme der relativen Gleitbewegung zwischen dem Rad und der Schiene zunimmt.

18. Verfahren zum Verringern der Abnutzung in einem Stahlrad/Stahlschiene-System, dadurch gekennzeichnet, daß auf die Aufstandsfläche des Rades und/oder der Schiene eine Schmiermittel-Zusammensetzung aufgetragen wird, die eine Veränderung der negativen Reibungskennlinie zwischen der Schiene und dem Rad zu einer positiven Reibungskennlinie bewirkt, wobei die Zusammensetzung aufweist:

a) mindestens 20 Gew.% eines Polymermediums;

b) mindestens 5 Gew.% eines Feststoff-Schmiermittels; und

c) mindestens 5 Gew.% eines Reibungsmodifizierers,

wobei der Reibungsmodifizierer und das Feststoff-Schmiermittel in der Zusammensetzung in einem Verhältnis (Reibungsmodifizierer : Feststoff-Schmiermittel) von 1 : 1 = 2,5 Gew.% vorliegt, wobei die Zusammensetzung ein Feststoff ist und einen Reibungskoeffizienten zwischen der Aufstandsfläche des Rades und der Schiene bei einem Kriechen von mehr als 2,5 % erzeugt, der größer als 0,1 ist, wobei der Reibungskoeffizient mit einer Zunahme der relativen Gleitbewegung zwischen dem Rad und der Schiene zunimmt.

19. Verfahren zum Verringern oder Eliminieren von Slip-Stick in einem Stahlrad/Stahlschiene-System, dadurch gekennzeichnet, daß auf das Rad eine Schmiermittel-Zusammensetzung kontinuierlich aufgetragen wird, welche aufweist:

a) mindestens 20 Gew.% eines Polymermediums;

b) mindestens 5 Gew.% eines Feststoff-Schmiermittels; und

c) mindestens 5 Gew.% eines Reibungsmodifizierers,

wobei der Reibungsmodifizierer und das Feststoff-Schmiermittel in der Zusammensetzung in einem Verhältnis (Reibungsmodifizierer : Feststoff-Schmiermittel) von 1 : 1 = 2,5 Gew.% vorliegt, wobei die Zusammensetzung ein Feststoff ist und einen Reibungskoeffizienten zwischen der Aufstandsfläche des Rades und der Schiene bei einem Kriechen von mehr als 2,5 % erzeugt, der größer als 0,1 ist, wobei der Reibungskoeffizient mit einer Zunahme der relativen Gleitbewegung zwischen dem Rad und der Schiene zunimmt.

20. Verfahren nach Anspruch 17, 18 oder 19, dadurch gekennzeichnet, daß die Schmiermittel-Zusammensetzung in Form eines Filmes aufgetragen wird, indem man einen Feststoff-Block der Zusammensetzung mit der Aufstandsfläche des Rades in Berührung hält.

## Revendications

1. Composition lubrifiante destinée à la lubrification de corps en acier en contact roulant-glissant, caractérisée en ce qu'elle comprend :

   a) au moins 20% en poids d'un milieu polymère ;
   b) au moins 5% en poids d'un lubrifiant solide ; et
   c) au moins 5% en poids d'un modificateur de frottement ;

   ledit modificateur de frottement et ledit lubrifiant solide étant présents dans la composition selon un rapport (modificateur de frottement:lubrifiant solide) de 1:1 ± 2,5% en poids, ladite composition étant solide et produisant un coefficient de frottement entre des corps glissants en contact roulant-glissant, lubrifiés à l'aide de la composition, avec un fluage supérieur à 2,5%, supérieur à 0,10, lequel coefficient de frottement augmente pour une vitesse relative croissante du mouvement de glissement entre lesdits corps.

2. Composition selon la revendication 1, caractérisée en ce que la composition comprend :

   a) 20-90% en poids d'un milieu polymère ;
   b) 5-40% en poids d'un lubrifiant solide ; et
   c) 5-40% en poids d'un modificateur de frottement.

3. Composition selon la revendication 1 ou 2, caractérisée en ce que ledit lubrifiant solide produit un coefficient de frottement entre des corps en acier de 0,03 à 0,2.

4. Composition selon l'une quelconque des revendications 1 à 3, caractérisée en ce que ledit modificateur de frottement comprend un matériau minéral pulvérisé.

5. composition selon l'une quelconque des revendications 1 à 4, caractérisée en ce que ledit solide lubrifiant et ledit modificateur de frottement sont présents en des quantités sensiblement égales.

6. Composition selon l'une quelconque des revendications 1 à 5, caractérisée en ce qu'elle comprend 56-80% en poids dudit milieu polymère, 10-22% en poids dudit lubrifiant solide, et 10-22% en poids dudit modificateur de frottement.

7. Composition selon l'une quelconque des revendications 1 à 6, caractérisée en ce que ledit milieu polymère comprend un quelconque ou plusieurs milieux choisis parmi le groupe comprenant la résine époxy ester, la résine polyuréthanne, la résine polyuréthanne-acrylique, la résine polyester, la résine polyéthylène et la résine polypropylène.

8. Composition selon l'une quelconque des revendications 1 à 7, caractérisée en ce que ledit lubrifiant solide est choisi parmi le groupe comprenant le disulfure de molybdène, le graphite et des combinaisons de ceux-ci.

9. Composition selon l'une quelconque des revendications 1 à 8, caractérisée en ce que ledit modificateur de frottement comprend un ou plusieurs matériaux choisis parmi le groupe comprenant le carbonate de calcium, le silicate de magnésium, le carbonate de magnésium, la bentonite, le charbon pulvérisé, le sulfate de baryum, l'amiante pulvérisée, le silicate d'aluminium, la silice, la silice amorphe, la silice synthétique, la silice naturelle, la poudre d'ardoise, la terre à diatomées, le quartz broyé, le stéarate de zinc, le stéarate d'aluminium, l'oxyde de zinc, l'oxyde d'antimoine, la dolomite, le carbonate de plomb, le sulfate de calcium, l'oxyde de plomb, le naphtalène synémite et les fibres de polyéthylène pulvérisées.

10. composition selon l'une quelconque des revendications 1 à 9, caractérisée en ce que ledit agent polymère représente quarante pour cent en poids de la composition, ledit lubrifiant solide représente trente pour cent en poids de la composition et ledit modificateur de frottement représente trente pour cent en poids de la composition.

11. Composition selon l'une quelconque des revendications 1 à 10, caractérisée en ce que ledit modificateur de frottement a une taille de particule comprise dans le domaine de 0,5 microns à 5 microns.

12. Composition selon l'une quelconque des revendications 1 à 11, caractérisée en ce que ledit modificateur de frottement produit un coefficient de frottement entre corps en acier compris dans le domaine de 0,4 à 0,8.

13. composition selon l'une quelconque des revendications précédentes, caractérisée en ce que la composition produit un coefficient de frottement entre corps en acier variant de 0,17 à 0,32 lorsque la vitesse relative de glissement augmente de 2,5% à 30%.

14. Composition selon la revendication 10, comprenant :

(a) 40% en poids d'un milieu en résine de polyester ;
(b) 30% ± 2,5% en poids de lubrifiant solide de disulfure de molybdène produisant un coefficient de frottement entre corps en acier d'environ 0,06 ; et
(c) 30% ± 2,5% en poids de talc pulvérisé (silicate de magnésium) produisant un coefficient de frottement entre corps en acier de 0,45 à 0,5 ;

de sorte que le coefficient de frottement acier-acier réalisé par la composition est supérieur à 0,15 et la composition présente une caractéristique de frottement positive.

15. Composition selon l'une quelconque des revendications 1 à 9, comprenant :

(a) 70% en poids d'un milieu en résine de polyester ;
(b) 14% ± 2,5% en poids de lubrifiant solide de disulfure de molybdène ; et
(c) 14% ± 2,5% en poids de talc pulvérisé (silicate de magnésium) ;

de sorte qu'en service, le coefficient de frottement acier-acier réalisé par la composition passe de 0,17 à 0,32 lorsque la vitesse relative de glissement augmente de 2,5% à 30%.

16. Composition selon l'une quelconque des revendications 1 à 15, caractérisée en ce qu'elle comprend un ou plusieurs catalyseurs choisis parmi le groupe consistant en le naphténate de cobalt, la n,n-diméthylaniline et le peroxyde de méthyléthylcétone.

17. Procédé de réduction du bruit dans un système roue acier/rail acier, caractérisé par le fait d'appliquer à la surface de la bande de roulement de la roue et/ou du rail une composition lubrifiante capable de modifier la caractéristique de frottement négatif entre le rail et la roue en une caractéristique de frottement positif, ladite composition comprenant :

a) au moins 20% en poids d'un milieu polymère ;
b) au moins 5% en poids d'un lubrifiant solide ; et
c) au moins 5% en poids d'un modificateur de frottement ;

ledit modificateur de frottement et ledit lubrifiant solide étant présents dans la composition selon un rapport (modificateur de frottement:lubrifiant solide) de 1:1 ± 2,5% en poids, ladite composition étant solide et produisant un coefficient de frottement entre la bande de roulement de la roue et le rail, avec un fluage supérieur à 2,5%, supérieur à 0,1, lequel coefficient de frottement augmente pour une vitesse relative croissante du mouvement de glissement entre la roue et le rail.

18. Procédé de réduction de l'usure dans un système roue acier/rail acier, caractérisé par le fait d'appliquer à la surface de la bande de roulement de la roue et/ou du rail une composition lubrifiante capable de modifier la caractéristique de frottement négatif entre le rail et la roue en une caractéristique de frottement positif, ladite composition comprenant :

a) au moins 20% en poids d'un milieu polymère ;
b) au moins 5% en poids d'un lubrifiant solide ; et
c) au moins 5% en poids d'un modificateur de frottement ;

ledit modificateur de frottement et ledit lubrifiant solide étant présents dans la composition selon un rapport (modificateur de frottement:lubrifiant solide) de 1:1 ± 2,5% en poids, ladite composition étant solide et produisant un coefficient de frottement entre la bande de roulement de la roue et le rail, avec un fluage supérieur à 2,5%, supérieur à 0,1, lequel coefficient de frottement augmente pour une vitesse relative croissante du mouvement de glissement entre la roue et le rail.

19. Procédé de réduction ou d'élimination de l'effet slip-stick dans un système roue acier/rail acier, caractérisé par le fait d'appliquer, de façon continue, à la roue une composition lubrifiante comprenant :

a) au moins 20% en poids d'un milieu polymère ;
b) au moins 5% en poids d'un lubrifiant solide ; et
c) au moins 5% en poids d'un modificateur de frottement ;

ledit modificateur de frottement et ledit lubrifiant solide étant présents dans la composition selon un rapport (modificateur de frottement:lubrifiant solide) de 1:1 ± 2,5% en poids, ladite composition étant solide et produisant un coefficient de frottement entre la bande de roulement de la roue et le rail, avec un fluage supérieur à 2,5%, supérieur à 0,1, lequel coefficient de frottement augmente pour une vitesse relative croissante du mouvement de glissement entre la roue et le rail.

20. Procédé selon la revendication 17, 18 ou 19, caractérisé en ce que ladite composition lubrifiante est appliquée sous la forme d'un film en maintenant un bloc solide de la composition en contact avec ladite bande de roulement de la roue.

**FIG.1**